# EUROPÄISCHE PATENTSCHRIFT

(11) **EP 0 479 007 B1**
(45) Veröffentlichungstag und Bekanntmachung des Hinweises auf die Patenterteilung: **10.11.1993**
(21) Anmeldenummer: 91115531.5
(22) Anmeldetag: 13.09.1991
(51) Int. Cl.: B23H 7/08

(54) **Drahtelektrode**
Wire electrode
Fil-électrode

(30) Priorität: 02.10.1990 DE 9013722 U
(43) Veröffentlichungstag der Anmeldung: 08.04.1992
(73) Patentinhaber: Berkenhoff GmbH, D-35452 Heuchelheim (DE)
(72) Erfinder: Groos, Heinrich, W-6348 Herborn (DE); Hermanni, Hans, W-6349 Sinn-Fleisbach (DE)
(74) Vertreter: Missling, Arne, Dipl.-Ing.

(56) Entgegenhaltungen:
- EP-A- 0 348 594
- GB-A- 2 015 909
- PATENT ABSTRACTS OF JAPAN vol. 9, no. 25 (M-355)(1748) 2. Februar 1985 & JP-A-59169723 (TATSUTA DENSEN K.K.)

## Beschreibung

Die Erfindung betrifft eine Drahtelektrode zum Schneiden von Werkstücken mittels Funkenerosion, bestehend aus einem Erodierdraht und einer diesen Erodierdraht umgebenden Deckschicht.

Eine Drahtelektrode dieser Art, und zwar mit einer Ummantelung, ist aus der DE-PS 29 06 245 bereits bekannt. Die Ummantelung des Erodierdrahtes bietet den Vorteil, daß ein hochfester Erodierdraht verwendet werden kann, der beim Erodieren mittels Spannvorrichtungen unter hoher Zugkraft gehalten werden kann, so daß ein sauberer Schnitt entsteht. Ein Fadenbruch während des Schnittes kann nunmehr dadurch vermieden werden, daß die Metallschicht der Ummantelung eine thermische Abschirmung bildet, die außerdem wegen ihrer geringen Dicke von dem Entladungskrater schnell durchbrochen wird und Legierungsbestandteile niedriger Verdampfungstemperatur, wie z.B. Zink, freisetzt. Insofern ist eine ummantelte Drahtelektrode wesentlich günstiger als die Verwendung einer nicht ummantelten.

Aus der japanischen Offenlegungsschrift 50-102999, zitiert in der DE-PS 29 06 245, Spalte 2, Zeilen 20 bis 24, ist es ferner bereits bekannt, eine Drahtelektrode aus einem hochfesten Werkstoff mit einem hochleitfähigen Metall, wie Gold oder Silber, zu ummanteln, um die Elektrode gegen einen Verlust ihrer Biegbarkeit infolge Beschmutzung bei Entladung zu schützen. Eine Verbesserung der Schnitteigenschaften einer solchen Drahtelektrode konnte (siehe daselbst) nicht festgestellt werden. Vielmehr entsprechen die Schnitteigenschaften lediglich denjenigen, die die Silberschicht und gegebenenfalls nach deren Verbrauch der Elektrodendraht selbst besitzt. Da Silber oder Gold zum einen teuer und zum anderen nur mäßige Schneidleistungen erbringen, haben sich derartige Drahtelektroden mit Silberbeschichtungen nicht durchsetzen können, sondern stattdessen diejenigen mit Ummantelungen aus Metallen oder Metallegierungen, die mindestens einen niedrigschmelzenden Anteil haben.

Es ist in jedem Fall erwünscht, daß die Schnittleistung, d.h. die Abtragsleistung im mm²/min und/oder die Oberflächengüte, weiter verbessert wird.

Es ist deshalb Aufgabe der Erfindung, eine Drahtelektrode der eingangs näher bezeichneten Art anzugeben, bei der ohne wesentlichen Mehraufwand die Abtragsleistung und/oder die erhaltene Oberflächengüte noch weiter gesteigert wird.

Erfindungsgemäß wird die Aufgabe mit dem Merkmalen des Anspruches 1 gelöst. Es ist vorteilhaft, wenn die Seele des Erodierdrahtes aus elektrisch gut leitendem Werkstoff, wie Kupfer, Messing, (Cu-Zn), Bronze, (Cu-Sn), Stahl mit Cu-Mantel oder dergleichen besteht.

Bereits in der eingangs erwähnten DE-PS 29 06 245 wurde der Gedanke erwogen, den Erodierdraht zunächst mit einer Kupfer- oder Silberschicht zu umgeben, die dann mit der den thermischen Schutz bewirkenden Metallschicht bedeckt ist. Eine Erhöhung der Schnittleistung konnte auf diese Art und Weise allerdings nicht erreicht werden. Die Erfindung verläßt beide oben ausführlich beschriebenen Wege: Einerseits wird nun die hochleitfähige Schicht nicht zwischen Erodierdraht und Ummantelung, sondern als äußere Mantelschicht aufgebracht, wenn überhaupt ein ummantelter Erodierdraht verwendet wird. Sie ist andererseits extrem dünn gehalten, und gerade die extrem geringe Schichtdicke führt zu einer Erhöhung der Schnittleistung um etwa 20 % und zur Verbesserung der Oberflächengüte. Die gleichmäßig dünne und den Verschleiß der Elektrode reduzierende Silberschicht mit ihrer hohen Leitfähigkeit erhöht die Stromdichte. Dabei behindert diese äußerst dünne hochleitfähige Schicht auch nicht die Verdampfung der unter dieser liegenden niedrig verdampfenden Legierungsbestandteile, wie dies beim Stand der Technik der Fall ist. Denkbar für eine Erklärung dieses Phänomens wäre hier die Auswirkung des Skin-Effekts.

Die näheren Einzelheiten der Erfindung werden nachstehend anhand eines Ausführungsbeispieles verdeutlicht.

Die Grafik gibt Meßergebnisse im Vergleich zu einem blanken Messingerodierdraht mit verschiedenen Messing-Erodierdrähten wieder, die in unterschiedlicher Weise mit einer reinen Silberschicht belegt sind. So ist bei Erodierdrähten mit 0,33 mm Durchmesser eine erhebliche Steigerung der Abtragsleistung festzustellen, wenn der Erodierdraht versilbert ist. Die in der Grafik angegebenen Belegungen von 2 bis 10 g/kg Messing ergeben bei diesem Durchmesser eine Silberschicht von 0,12 bis 0,64 µm.

Die in der Grafik dargestellten Versuche wurden auf modernen Schneidanlagen mit Generatoren von 200 bis 300 kHz durchgeführt. Bei diesen Versuchen zeigte sich, daß die Funkenentladungen präzise und sauber ohne Dämpfung übertragen werden, während nicht überzogene Erodierelektroden dazu neigen, daß die Funkenübertragungen gedämpft werden.

Desweiteren bewirkt diese hochleitfähige Schicht eine sehr gleichmäßige Erosion, was insbesondere beim Fein- und Präzisschneiden Vorteile bringt. Die hohe Stromdichte entsprechend dem Skin-Effekt bewirkt, daß der Verschleiß der Elektrode gegenüber normalen Elektroden abnimmt. Hierdurch kann beim Fein- und Präzisschneiden die Durchlaufgeschwindigkeit der Drahtelektrode verringert werden (Kostenersparnis), wobei gleichzeitig die Kraterbildung flacher ist, so daß eine geringere Oberflächenrauhheit entsteht. Durch die duktile Schicht des hochleitenden Werkstoffs ist der Gleitwiderstand am Elektrokontakt wesentlich verbessert. Der Verschleiß geht zurück, es gibt wesentlich geringere Vibrationen, und der Draht läuft bei einem präzisen Schnitt ruhig ab.

Durch die hohe Leitfähigkeit der dünnen Beschichtung hat die Oberfläche eine hohe Kontaktfähigkeit. Hierdurch erreicht man eine präzisere und schnellere Positioniergenauigkeit beim anfänglichen Einstellen und damit eine erhebliche Zeit- und Kostenersparnis. Die abgetragenen Silber-, Goldpartikel, etc. bewirken darüberhinaus eine verbesserte Leitfähigkeit im Schneidkanal, so daß der Funkenübergang gleichfalls verbessert wird. Außerdem wird durch den duktilen Überzug eine Verminderung der Spannungsrißkorrosion des Kernmaterials erreicht. Letztlich verbessert sich damit die Lebensdauer des Elektrodendrahtes.

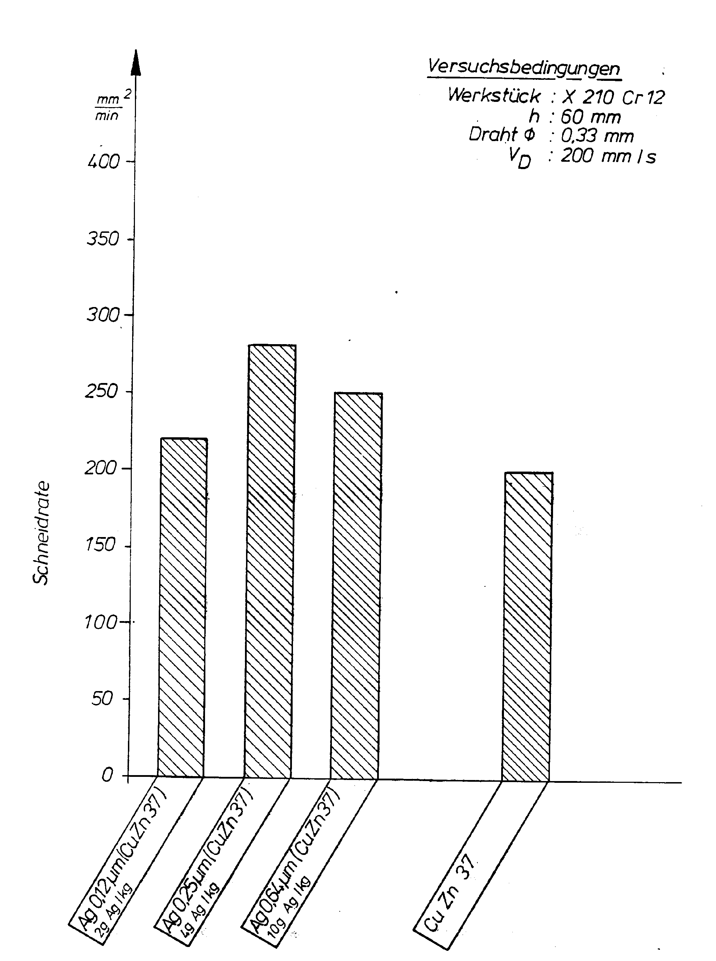

## Patentansprüche

1. Drahtelektrode zum Schneiden von Werkstücken mittels Funkenerosion, bestehend aus einem Erodierdraht und einer diesen Erodierdraht umgebenden Deckschicht, dadurch gekennzeichnet, daß die Deckschicht aus einem elektrisch hochleitfähigem Werkstoff, wie z.B. Silber, Gold, Rhodium, Paladium oder Iridium oder deren Legierungen besteht, und daß die Deckschicht eine Schichtdicke von 0,05 bis 0,8 µm aufweist.

2. Drahtelektrode nach Anspruch 1, dadurch gekennzeichnet, daß die Deckschicht aus Silber besteht.

3. Drahteleketrode nach Anspruch 1 oder 2, dadurch gekennzeichnet, daß unter der Deckschicht eine weitere Mantelschicht mit einem oder mehreren metallischen Legierungsbestandteilen mit niedriger Verdampfungstemperatur, wie Zink, Kadmium, Blei, Antimon, Wismut, Graphit angeordnet ist.

4. Drahtelektrode nach Anspruch 1, dadurch gekennzeichnet, daß die Seele des Erodierdrahtes aus elektrisch gut leitendem Werkstoff, wie Kupfer, Kupferseele mit Messing, Messing, (Cu-Zn), Bronze, (Cu-Sn), Stahl mit Cu-Mantel, Wolfram, Molybdän oder dergleichen besteht.

## Claims

1. Wire electrode for cutting workpieces by means of spark erosion. comprising an erosion wire and a cover layer surrounding this erosion wire, characterised in that the cover layer consists of an electrically highly-conductive material, such as silver, gold, rhodium, palladium or iridium, or alloys thereof, and in that the cover layer is 0.05 to 0.8 µm in thickness.

2. Wire electrode according to claim 1, characterised in that the cover layer is of silver.

3. Wire electrode according to claim 1 or 2, characterised in that a further casing layer with one or more metallic alloy components with a low vaporization point, such as zinc, cadmium, lead, antimony, bismuth, graphite, is arranged under the cover layer.

4. Wire electrode according to claim 1, characterised in that the core of the erosion wire consists of a material which is a good electrical conductor such as copper, copper core with brass, brass, (Cu-Zn), bronze, (Cu-Sn), steel with a Cu covering, tungsten, molybdenum or similar.

## Revendications

1. Fil électrode pour couper par électro-érosion des pièces à usiner, constitué d'un fil d'érosion et d'une couche de revêtement entourant ce fil d'érosion, caractérisé en ce que la couche de revêtement est constituée d'un matériau à haute conductibilité électrique, comme, par exemple, de l'argent, de l'or, du rhodium, du paladium ou de l'iridium, ou leurs alliages, et en ce que la couche de revêtement présente une épaisseur de couche de 0,05 à 0,8 micromètres.

2. Fil électrode suivant la revendication 1, caractérisé en ce que la couche de revêtement est constituée d'argent.

3. Fil électrode suivant la revendication 1 ou la revendication 2, caractérisé en ce que, sous la couche de revêtement, est disposée une autre couche de gainage comportant un ou plusieurs constituants d'alliage à basse température de vaporisation, comme du zinc, du cadmium, du plomb, de l'antimoine, du bismuth, du graphite.

4. Fil électrode suivant la revendication 1, caractérisé en ce que l'âme du fil d'érosion est constituée de matériau bon conducteur de l'électricité, comme le cuivre, une âme de cuivre avec laiton, le laiton, (Cu-Zn), le bronze, (Cu-Sn), l'acier avec gaine de cuivre, le tungstène, le molybdène ou similaires.
